# EUROPÄISCHE PATENTSCHRIFT

(11) **EP 0 986 344 B1**
(45) Veröffentlichungstag und Bekanntmachung des Hinweises auf die Patenterteilung: **03.08.2005**
(21) Anmeldenummer: 98929280.0
(22) Anmeldetag: 02.05.1998
(51) Int. Cl.: A61C 9/00

(54) **FORM ZUR HERSTELLUNG EINES ZAHNMODELLES**
MOLD FOR PRODUCING A MODEL OF A TOOTH
MOULE POUR LA PRODUCTION D'UN MODELE DENTAIRE

(30) Priorität: 25.05.1997 DE 19722989
(43) Veröffentlichungstag der Anmeldung: 22.03.2000
(73) Patentinhaber: Hahn, Rainer, Dr., 72074 Tübingen (DE)
(72) Erfinder: Hahn, Rainer, Dr., 72074 Tübingen (DE)
(74) Vertreter: Ostertag, Reinhard
(86) Internationale Anmeldenummer: PCT/EP1998/002601
(87) Internationale Veröffentlichungsnummer: WO 1998/052491

(56) Entgegenhaltungen:
- EP-A- 0 694 293
- DE-A- 3 837 551

## Beschreibung

Die Erfindung betrifft eine Form zur Herstellung eines Zahnmodelles ausgehend von einem Zahnabdruck gemäß dem Oberbegriff des Anspruches 1.
Derartige Formen sind aus DE-A-3837551 bekannt.

Derartige Formen sind als becherförmige Gebilde bekannt.

Zur Herstellung eines Zahnmodelles aus einem Zahnabdruck wird der Zahnabdruck mit einem plastischen und erhärtenden Modellmaterial ausgegossen. Unmittelbar nach dem Ausgießen des Zahnabdruckes mit dem Modellmaterial wird in seltenen Fällen, solange das Modellmaterial noch weich ist, eine zumeist gummiartige Form an der Umfangswand des Zahnabdruckes angebracht, um durch Auffüllen der Form bis zu einer vorgegebenen Höhe eine Basisfläche am Zahnmodell zu erhalten.

Zur Herstellung von Zahnersatz wird diese Basisfläche parallel zur Kauebene mechanisch durch Schleifbearbeitung betrimmt; es resultiert ein sogenannter Zahnkranz aus Modellmaterial.

Anschließend werden mittels einer Bohrmaschine und eines Spiralbohrers Sacklöcher in die.Basisfläche des Zahnkranzes eingebohrt, jeweils unter den zu restaurierenden Zähnen, Nachbarzähnen oder Antagonisten, und in die Sacklöcher werden Metallstifte (Pins) eingebracht und vorzugsweise eingeklebt.

Nach anschließender Isolierung der Basisfläche zumeist mit einem Isoliermaterial auf Alginatbasis wird der Zahnkranz mit den eingeklebten Pins nach basal ausgerichtet und in eine etwa zwei Zentimeter hoch mit vorzugsweise derselben plastischen Modellmasse aufgefüllte Form so weit eingebracht, bis die Basisfläche des Zahnkranzes gerade mit der plastischen Modellmasse vollständig benetzt ist. Diese Masse bildet nach ihrer Aushärtung den Sockel für den Zahnkranz; Zahnkranz und Sockel bilden zusammen das fertige Zahnmodell.

Nach Erhärtung des Sockels und dessen mechanischem Betrimmen wird der Zahnkranz jeweils senkrecht zur durch die einzelnen Zahngruppen vorgegebenen Tangenten so bis auf den Sockel zersägt, daß die zu restaurierenden Modellzähne, Nachbarzähne, Kiefersegmente oder beliebige andere Modellzähne oder Modellzahngruppen vom Sockel einzeln abgenommen und durch die Pins präzise reponiert werden können.

Ein solches Sägeschnittmodell ist Voraussetzung zur Erstellung jeglicher Art von Zahnerssatz aus Zahnabdrücken.

Eine andere Art der Herstellung von Modellsockeln besteht darin, daß die parallel betrimmten konventionell hergestellten Zahnkränze in einer spezielle Bohrvorrichtung mit den Sacklöchern für die Pins versehen werden und dabei gleichzeitig spiegelbildliche Löcher in eine vorgefertigte Sockelplatte aus Kunststoff zur Aufnahme der in den Zahnkranz einzuklebenden Pins zusammen mit dem Zahnkranz eingebohrt werden. Das Herausnehmen der präparierten Zähne erfolgt im konventionellen Sägeschnittverfahren. Dadurch wird zwar die aufwendige Verarbeitung einer zweiten plastischen Modellmasse zur Herstellung des Sockels eingespart, jedoch ist eine teure Anlagentechnik erforderlich.

Besonders problematisch bei der Herstellung von Zahnmodellen, insbesondere Zahnkränzen, ist das Ausgießen des zumeist hydrophoben Zahnabdruckes mit dem hydrophilen Modellmaterial, üblicherweise Dentalgips. Begünstigt durch die schmalen Vertiefungen der einzelnen abgeformten Zähne, zahnformbedingten Hinterschneidungen und die texturierte Oberflächenfeinzeichnung der Zähne kommt es in den meisten Fällen zu Blasenbildungen im Zahnmodell, welche nicht selten eine Neuanfertigung des Zahnmodelles notwendig machen. Eine solche Neuanfertigung ist allerdings in den meisten Fällen von geringerer Qualität als das erste Zahnmodell, da mit dessen Entformung aus dem Zahnabdruck feine Kanten und Oberflächenstrukturen sowie feine Interdentallamellen oder Lamellen im Sulkusbereich mit abbrechen.

Im weiteren sind Fehlstellen, welche auf der zahnärztlichen Abformung zum Erhalt des Zahnabdruckes beruhen, häufig erst auf dem Zahnmodell erkennbar. Dieses liegt aufgrund seiner aufwendigen Herstellung jedoch zumeist erst einige Tage nach der Abdrucknahme am Patienten vor. In vielen Fällen muß dann der Patient für eine neue Abdrucknahme nochmals einbestellt werden, was mit einem hohen Aufwand verbunden ist und durch die zumeist mit der Erstbehandlung als Folge verknüpfte Blutungsneigung bei der Folgebehandlung oft zu schlechteren Abdruckergebnissen führt.

Durch die Erfindung soll eine Form zur Herstellung eines Zahnmodelles ausgehend von einem Zahnabdruck geschaffen werden, die eine einfachere Verfahrenstechnik ermöglicht, bei der nur eine kleinere Anzahl von Arbeitsschritten zu erledigen ist, und bei deren Anwendung die Zahl der Fehlerquellen vermindert ist und Zahnmodelle höherer Präzision erhalten werden.

Diese Aufgabe ist erfindungsgemäß gelöst durch eine Form mit den im Anspruch 1 angegebenen Merkmalen.

Bei der erfindungsgemäßen Form wird die Bodenwand der

Form durch den Abdrucklöffel gebildet, mit welchem der Zahnabdruck hergestellt wurde, wobei der Zahnabdruck zur Herstellung des Zahnmodelles auf dem Abdrucklöffel verbleibt.

Der Abdrucklöffel hat zumindest in Abschnitten seiner Außenfläche eine präzise vorgegebene Geometrie und kann ohne Nachbearbeitung präzise und dicht mit der Umfangsdwand der Form verbunden werden.

Wie aus der späteren detaillierten Beschreibung noch deutlicher hervorgehen wird, ist die Herstellung eines Zahnmodelles mit der erfindungsgemäßen Form zeit- und kostensparend. Insbesondere entfällt gegenüber der konventionellen Herstellung des Zahnkranzes das mechanische Betrimmen, das Bohren der Sacklöcher für die Pins und die Herstellung der Sockelplatte unter nochmaliger Verarbeitung von Modellmaterial, wobei zur Herstellung des Zahnkranzes keine aufwendige Anlagentechnik benötigt wird.

Die Anwendung der erfindungsgemäßem Form ist in hohem Maße fehlertolerant und läßt sich weitgehend automatisieren.

Die Erfindung macht es auch möglich, daß das Zahnmodell schon direkt beim Zahnarzt hergestellt wird. Dieser braucht nur nach Anfertigung des Zahnabdruckes den verwendeten Abdrucklöffel zusammen mit dem Abdruck selbst in die Umfangswand einzuspannen und in die so erhaltene Form über dem Zahnabdruck eine ausreichende Menge Modellmaterial einzubringen. An den Zahntechniker wird dann nur das so erhaltene Zahnmodell weitergegeben.

Die Herstellung des Zahnmodelles schon beim Zahnarzt hat auch den Vorteil, daß am Zahnmodell kleinere Fehler des Zahnabdruckes besser erkannt werden und der Zahnarzt in diesem Falle sofort nochmals einen Zahnabdruck vom Patienten nehmen kann, bevor dieser die Praxis verläßt.

Eine Form gemäß Anspruch 1 ist allseitig dicht geschlössen.

Man kann daher die Form beim Füllen mit Unterdruck oder auch Überdruck beaufschlagen. Die Unterdruckbeaufschlagung hat dabei den Vorteil, daß die Blasenbildung sehr klein gehalten wird. In beiden Fällen fließt das Modellmaterial gut auch in kleine Zwischenräume hinein.

Ferner kann man eine Form gemäß Anspruch 1 vor dem Einfüllen des Modellmateriales mit einem Netzmittel oder einem anderen Behandlungsmedium durchspülen, um die Oberfläche des Abdruckes optimal auf späteren Kontakt mit Modellmaterial vorzubereiten.

Eine Form gemäß Anspruch 1 gestattet auch auf einfache Weise die Herstellung eines Zahnmodelles, welches auf seiner Basisseite schon ohne mechanische Bearbeitung des Modellmateriales plan ist. Die erfindung erlaubt eine wiederholbare präzise Zuführung des Modellmateriales zum Formraum.

Vorteilhafte Weiterbildungen der Erfindung sind in Unteransprüchen angegeben.

Dabei ist die Weiterbildung der Erfindung gemäß Anspruch 2 im Hinblick auf eine lunkerfreie Qualität der beim Gießen oberen Stirnfläche des Zahnmodelles von Vorteil.

Auch die Weiterbildung der Erfindung gemäß Anspruch 3 dient einem blasenfreien vollständigen Ausfüllen der Form mit Modellmaterial.

Mit der Weiterbildung der Erfindung gemäß Anspruch 4 wird erreicht, daß das Zuführen von Modellmaterial automatisch beendet wird, wenn die Form vollständig mit Modellmaterial gefüllt ist.

Gemäß Anspruch 5, 6 oder 7 lassen sich auf einfache und zuverlässige Weise Dichtverbindungen zwischen der Umfangswand und dem Abdrucklöffel und/oder der Umfangswand und der Modellplatte realisieren.

Die Weiterbildung der Erfindung gemäß Anspruch 8 ist im Hinblick auf ein präzises reproduzierbares Positionieren einer Modellplatte auf der Umfangswand von Vorteil.

Die Weiterbildung der Erfindung gemäß Anspruch 9 gestattet es, ein Zahnmodell zu realisieren, welches anschließend durch zum Kieferbogen transversale Sägeschnitte zu einem Sägeschnittmodell gemacht werden kann, bei welchem einzelne Zähne oder Zahngruppen entnehmbar und präzise repositionierbar sind.

Hierzu kann man gemäß Anspruch 10 Positionierstifte verwenden, welche in das Zahnmodell eingebettet sind und jeweils einen über das Zahnmodell überstehenden Positionierabschnitt aufweisen.

Gemäß Anspruch 11 kann man die Sackausnehmungen in der Modellplatte auch gasdurchlässig machen, so daß das Modellmaterial in die Sackausnehmungen eindringen kann, wenn das Einbringen des Modellmateriales unter Überdruck erfolgt. Beim Einbringen unter Unterdruck wird in den Sackausnehmungen befindliche Luft abgesaugt. Hierdurch ergeben sich an das Zahnmodell angeformte Positionierzapfen, die zu den Sackausnehmungen komplementär sind.

Dabei wird mit der Weiterbildung der Erfindung gemäß Anspruch 12 gewährleistet, daß zwischen dem Modellmaterial und dem Zahnabdruck keine Luftblasen eingeschlossen werden.

Die Weiterbildung der Erfindung gemäß Anspruch 13 gestattet es, unter Verwendung gleicher Grundbauteile Formen unterschiedlicher Höhe zu realisieren, wodurch dann auch Zahnmodelle unterschiedlicher Höhe auf gleiche Weise gefertigt werden können.

Die Weiterbildung der Erfindung gemäß Anspruch 14 erlaubt auf einfache Weise ein dichtes Verspannen der Umfangswand mit dem Modelllöffel.und ggf. der Modellplatte, insbesondere auch in Fällen, in denen Abdrucklöffel sowie ggf. Modellplatte und Umfangswand zusammenarbeitende Formschlußmittel aufweisen, welche einerseits für ein exaktes Ausrichten des Abdrucklöffels in der Umfangswand und andererseits für eine gute Abdichtung des Formraumes sorgen.

Mit der Weiterbildung der Erfindung gemäß Anspruch 15 ist dabei gewährleistet, daß auch bei dem in der Umfangswand vorgesehenen Schlitz eine gute Abdichtung des Formraumes erhalten wird.

Die Weiterbildungen der Erfindung gemäß den Ansprüchen 16 und 17 gestatten es, das Füllen des Formraumes mit Modellmaterial von außen visuell zu kontrollieren, insbesondere bei Verwendung von gefärbten Modellmaterialien.

Mit der Weiterbildung der Erfindung gemäß Anspruch 18 wird erreicht, daß die Außenfläche oder äußere Mantelfläche des Zahnmodelles eine Form hat, die sich für exaktes Positionieren in einem Artikulator oder einer ähnlichen Vorrichtung eignet, ohne daß hierzu die Außenfläche des Zahnmodelles spanend bearbeitet werden müßte. Damit entfällt im Zahnlabor bei Verwendung einer erfindungsgemäßen Form insgesamt die lästige Erzeugung von Gipsstaub oder Staub anderer Modellmaterialien.

Nachstehend wird die Erfindung anhand von Ausführungsbeispielen unter Bezugnahme auf die beiliegende Zeichnung näher erläutert. In dieser zeigen.
- Figur 1:: Eine Aufsicht auf eine Form zum Herstellen von Zahnmodellen zusammen mit einer schematisch dargestellten Einrichtung zum Füllen der Form mit Modellmaterial, wobei ein Teil einer die Oberseite der Form bildenden Modellplatte weggebrochen ist;
- Figur 2:: Einen transversalen Schnitt durch die in Figur 1 gezeigte Form längs der abgewinkelten Schnittlinie II-II von Figur 1;
- Figur 3:: Eine Aufsicht auf die modellseitige Begrenzungsfläche der Modellplatte von Figuren 1 und 2;
- Figur 4:: Einen Längsschnitt durch die Modellplatte längs der Schnittlinie IV-IV von Figur 3;
- Figur 5:: Eine Aufsicht auf die modellseitige Begrenzungsfläche der Modellplatte mit einem von dieser getragenen zersägten Zahnkranz eines Kieferbogens;
- Figur 6:: Eine Aufsicht auf die halterungsseitige Begrenungsfläche der in Figur 5 gezeigten Modellplatte;
- Figur 7:: Einen zur Figur 2 ähnlichen Schnitt durch eine abgewandelte Form, die zur Herstellung höherer Zahnmodelle dient;
- Figur 8:: Eine ähnliche Ansicht wie Figur 3, in welcher eine abgewandelte Modellplatte wiedergegeben ist;
- Figuren 9 und 10:: Schnitte durch weiter abgewandelte Modellplatten, die ähnlich gelegt sind wie der Schnitt von Figur 2; und
- Figur 11:: Eine ähnliche Absicht wie Figur 1, in welcher jedoch eine abgewandelte Einrichtung zum Füllen der Form mit Modellmaterial wiedergegeben ist.

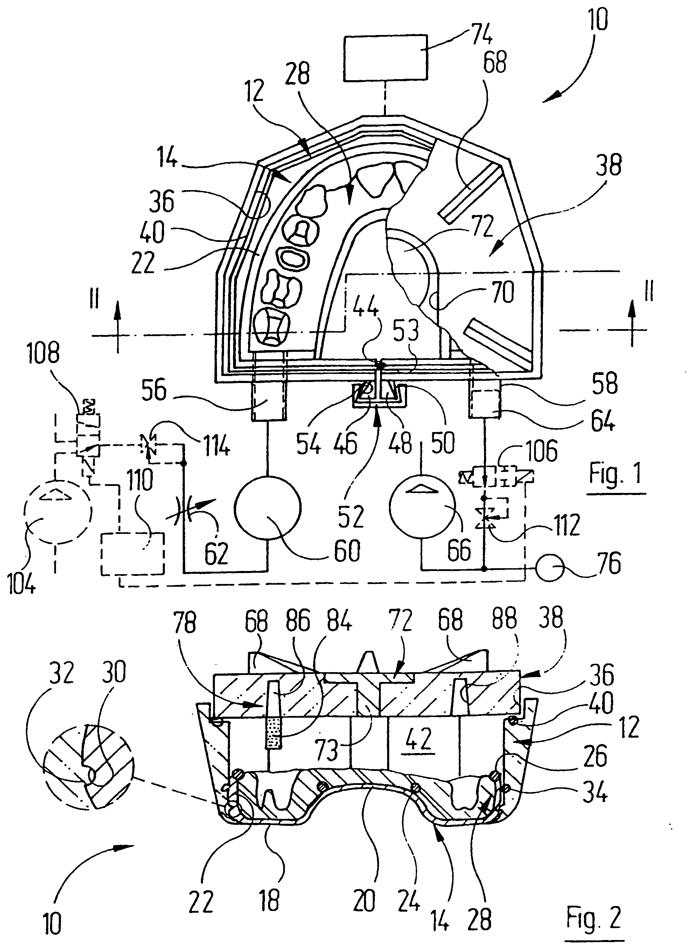

In den Figuren 1 und 2 ist eine Form zum Herstellen von Zahnmodellen wiedergegeben, die insgesamt mit 10 bezeichnet ist. Die Form 10 hat eine Umfangswand 12, deren unterer Abschnitt komplementär zur Außenfläche eines Abdrucklöffels 14 ist.

Der dargestellte Abdrucklöffel 14 ist ein Löffel zur Herstellung von Oberkieferabdrücken und hat eine Bodenwand 18 mit einem mittleren, dem Gaumensegel nachgebildeten Wandabschnitt 20 und eine in Umfangsrichtung verlaufende Randwand 22. Am Rand des Wandabschnittes 20 und am oberen Ende der Randwand 22 sind angelötete Drahtstücke 24 bzw. 26 vorgesehen, durch welche Hinterschneidungen geschaffen werden, an denen ein Zahnabdruck 28 verrastet ist, welcher z.B. aus Silikon, Alginat oder dgl. hergestellt ist.

Im unteren Drittel der Randwand 22 ist eine in Längsrichtung verlaufende Nut 30 vorgesehen, in welche eine in Längsrichtung verlaufende Rippe 32 formschlüssig eingreift, die auf der Innenfläche der Umfangswand 12 vorgesehen ist.

Über der Rippe 32 ist von der Umfangswand 12 eine Dichtung 34 getragen, die mit der Außenfläche der Umfangswand 22 zusammenarbeitet. Sowohl durch diese Dichtung als auch durch die Formschlußverbindung zwischen Nut 30 und Rippe 32 erhält man eine gute Abdichtung und präzise Positionierung zwischen Umfangswand 12 und Abdrucklöffel 14.

Wie aus Figur 2 gut ersichtlich, entspricht die Kontur der Innenfläche der Umfangswand 12 der Kontur der Außenfläche der Randwand 22, was ebenfalls zur Abdichtung und guten Positionierung beiträgt. Außerdem geht die Außenfläche der Umfangswand 12 glatt in die Außenfläche des Abdrucklöffels 14 über.

Die Außenfläche der Umfangswand 12 verläuft schräg nach außen geneigt, so daß die Stärke der Umfangswand 12 nach oben hin zunimmt.

Von der oberen Stirnfläche der Umfangswand 12 springt eine in Längsrichtung der Umfangswand 12 verlaufende Randausnehmung 36 zurück. In die Randausnehmung 36 greift ein unterer Abschnitt einer Modellplatte 38 formschlüssig ein. In den Boden der Randausnehmung 36 ist eine Dichtung 40 eingelegt, die mit dem Rand der in Figur 2 unteren Begrenzungsfläche der Modellplatte 38 zusammenarbeitet.

Die Umfangswand 12, der Abdrucklöffel 14 und der von diesem getragene Zahnabdruck 28 sowie die Modellplatte 38 begrenzen so zusammen einen nach außen abgedichteten Formhohlraum 42.

Um die Umfangswand 12 auf dem Abdrucklöffel 14 anbringen zu können, ist der in Figur 1 untenliegende Wandabschnitt der Umfangswand 12 mit einem Schlitz 44 versehen. Die Umfangswand 12 ist aus einem im wesentlichen starren aber doch etwas elastisch verformbaren Kunststoffmaterial hergestellt, so daß die Umfangswand 12 unter durch den Schlitz 44 ermöglichter elastischer Aufweitung auf den Abdrucklöffel 14 aufgeclipst oder von diesem abgenommen werden kann.

Der in Figur 1 unten liegende Wandabschnitt der Umfangswand 12 hat in der Nachbarschaft des Schlitzes 44 zwei Schwalbenschwanzteile 46, 48, deren Schwalbenschwanzflächen 50 nach unten zu breiter werden. Schiebt man auf die Schwalbenschwanzflächen 50 ein Spannteil 52 auf, welches mit komplementären innenliegenden Schwalbenschwanzflächen 54 versehen ist, so wird die Umfangswand 12 beim Schlitz 44 zusammengezogen und dadurch in feste und dichte Anlage an die Außenfläche des Abdrucklöffels 14 gebracht. Zugleich wird eine zwischen den Seitenflächen des Schlitzes 44 liegende Dichtung 53 unter Vorspannung gesetzt.

In den außenliegenden Bereichen des unteren Wandabschnittes der Umfangswand 12 sind zwei Anschlußstutzen 56, 58 vorgesehen. Von diesen ist der linke mit dem Auslaß eines Vorratsbehälters 60 dicht verbunden, der ein flüssiges Modellmaterial (z. B. Gips) enthält. Ein Belüftungsanschluß des Vorratsbehälters 60 steht über eine einstellbare Drossel 62 mit der Umgebung in Verbindung.

Der Anschlußstutzen 58 enthält einen Stopfen 64, der gasdurchlässig ist, für Modellmaterial dagegen eine Sperre darstellt. Über den Stopfen 64 ist der Anschlußstutzen 58 mit der Saugöffnung einer Saugpumpe 66 verbunden. Deren Auslaß steht ebenfalls mit der Umgebungsatmosphäre in Verbindung.

Wie aus den Figuren 1, 2 und 6 gut ersichtlich, trägt die vom Formhohlraum 42 abgelegene Begrenzungsfläche der Modellplatte 38 radiale Positionierrippen 68, welche im wesentlichen dreieckigen Grundquerschnitt haben und zur Mitte der Modellplatte 38 hin abfallen. Die Positionierrippen 68 arbeiten mit komplementären Positioniernuten eines nicht gezeigten Halteteiles zusammen, wie bei geteilten Magnetsockel-Systemen üblich. Das Halteteil wird seinerseits in den Artikulator oder eine Bearbeitungsvorrichtung des Dentaltechnikers eingespannt.

Ferner trägt die außenliegende Seite der Modellplatte 38 innerhalb einer flachen zum Rand hin offenen Vertiefung 70 ein scheibenförmiges Fixierteil 72 mit einem in die Modellplatte eingebetteteten Schaft 73 aus magnetischem oder magnetisierbarem Material, welches mit einem Gegen-Fixierteil zusammenarbeitet, das von dem Halteteil getragen ist und ebenfalls aus magnetischem oder magnetisierbarem Material besteht. Auf diese Weise wird die Modellplatte 38 lösbar auf dem Halteteil fixiert.

Zum Herstellen eines Zahnmodelles mit der oben beschriebenen Form wird wie folgt gearbeitet:
Der den Zahnabdruck 28 tragende Abdrucklöffel 14 wird in die Umfangswand 12 eingerastet, und die Modellplatte 38 wird in das obere Ende der Umfangswand 12 eingesetzt. Dann wird das Spannteil 52 auf die Schwalbenschwanzteile 46, 48 geschoben, wodurch die vorgenannten Teile miteinander verspannt werden.

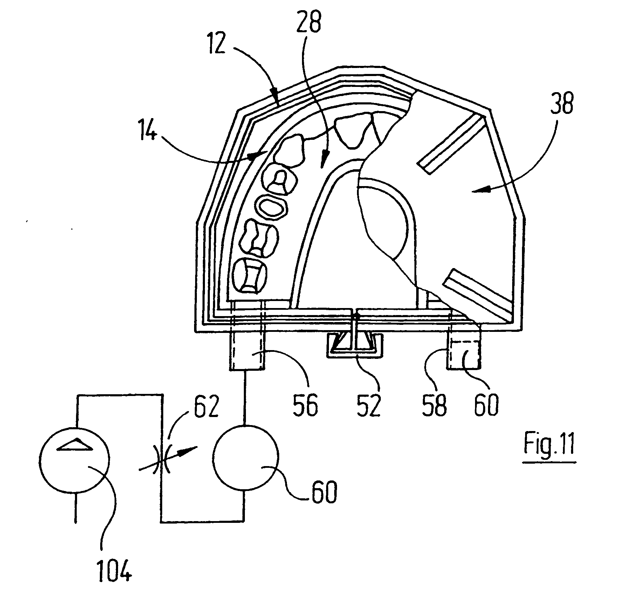

Dann wird die Saugpumpe 66 in Gang gesetzt und der Formhohlraum 42 wird mit durch die Einstellung der Drossel 62 vorgegebener Geschwindigkeit mit flüssigem Modellmaterial gefüllt. Alternativ kann man das Modellmaterial auch unter Überdruck einspeisen, wie weiter unten unter Bezugnahme auf Figur 11 genauer beschrieben werden wird.

Bevorzugt wird der Formhohlraum 42 zuerst evakuiert, und anschließend wird das Modellmaterial unter Überdruck eingespeist. Hierzu werden ein Kompressor 104 und ein 2/2 bzw. ein 3/2-Magnetventil 106 bzw. 108 verwendet, die durch eine geeignete Steuerung 110 betätigt werden. Zur Vorgabe des Unterdruckes und des Überdruckes im Formhohlraum 42 dienen Druckregler 112 und 114. Diese Variante ist in Figur 1 gestrichelt dargestellt.

Der Füllvorgang kann visuell durch die Modellplatte 38 und/oder die Umfangswand 12 kontrolliert werden. Durch zusätzliches Schütteln oder Vibrieren der Form 10 kann man den Füllvorgang vergleichmäßigen und etwa unter Modellmaterial in den Vertiefungen des Zahnabdruckes 28 gefangene Luftblasen zum Aufsteigen bringen. Vorzugsweise erfolgt dies durch einen mechanischen Vibrator 74, der mit der Form 10 mechanisch gekoppelt ist, wie in Figur 1 gestrichelt angedeutet.

Zu Ende des Füllvorganges erreicht dann das flüssige Modellmaterial den Stopfen 64. Da es diesen nicht durchsetzen kann, arbeitet die Saugpumpe 66 nun gegen ein abgeschlossenes Volumen, was akustisch gut wahnnehmbar ist. Falls gewünscht kann man an die zwischen dem Stopfen 64 und der Saugpumpe 66 verlaufende Leitung auch einen Druckwächter 76 anschließen, dessen Ausgangssignal zur Alarmgabe verwendet werden kann.

Ist das Modellmaterial ausgehärtet, so wird das Spannteil 52 von den Schwalbenschwanzteilen 46, 48 heruntergeschoben. Nun kann man die Modellplatte 38 nach oben vom Abdrucklöffel 14 und dem von diesem getragenen Zahnabdruck 28 abheben.

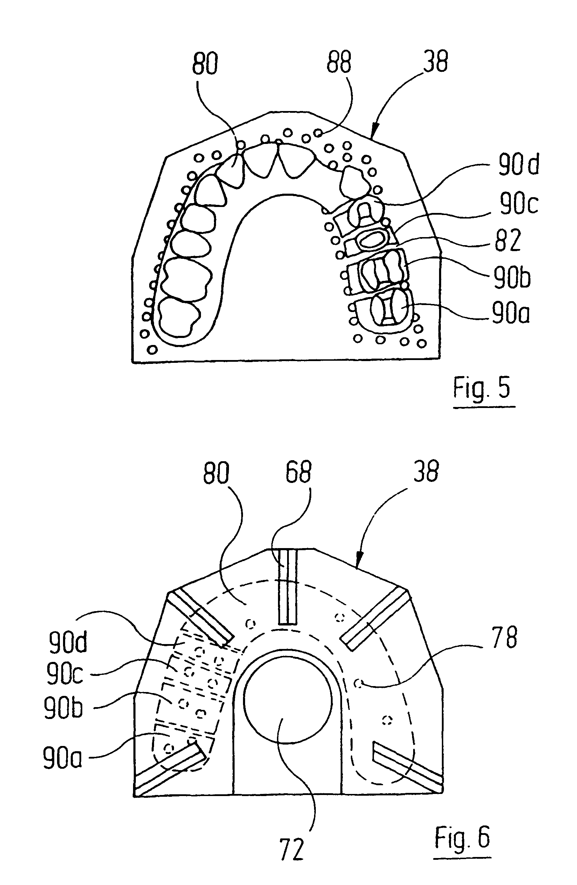

Hat man vor dem Ausfüllen des Formhohlraumes 42 auf der Modellplatte 38 Positionierstifte 78 an solchen Stellen eingesetzt, an denen das fertige Zahnmodell 80 später herausnehmbare Segmente oder Positionierstifte haben soll, kann man, wie in Figur 5 dargestellt, anschließend durch Schnitte 82 diese Segmente durch Sägeschnitte 82 herstellen, so daß die entsprechenden Kiefersegmente einzeln von der Modellplatte 38 abnehmbar sind und später auch präzise wieder dort repositionierbar sind.

Die Positionierstifte 78 haben jeweils einen Verankerungsabschnitt 84, der in das Modellmaterial eingegossen wird und zur Verbesserung des Kraftschlusses mit einer Rändelung mit Nuten oder dergleichen versehen ist. Ferner haben die Positionierstifte 78 kegelstumpfförmige Positionierabschnitte 86, die zu Sackausnehmungen 88 komplementär sind, welche in Rasteranordnung auf der formhohlraumseitigen Begrenzungsfläche der Modellplatte 38 vorgesehen sind. In Figur 5 sind vier verschiedene herausnehmbare Segmente 90a, 90b, 90c und 90d des Zahnmodelles 80 wiedergegeben, die zwei von der Kaufläche zurückspringenden Kavitäten, einer kegelstumpfähnlichen Kronenpräparation und einer seitlichen Kavität eines Zahnes entsprechen.

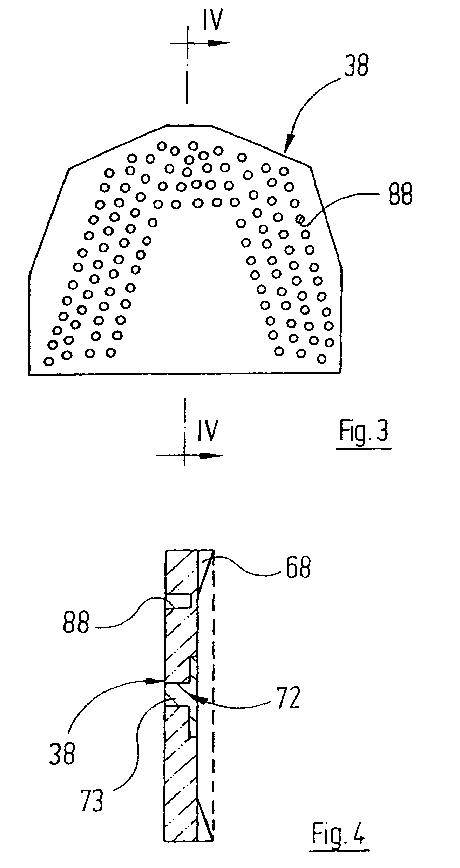

Bei den nachstehend beschriebenen Ausführungsbeispielen sind Formteile, die obenstehend schon unter Bezugnahme auf die Figuren 1 bis 6 erläutert wurden, wieder mit denselben Bezugszeichen versehen. Diese Formteile werden nachstehend auch nicht nochmals detailliert beschrieben.

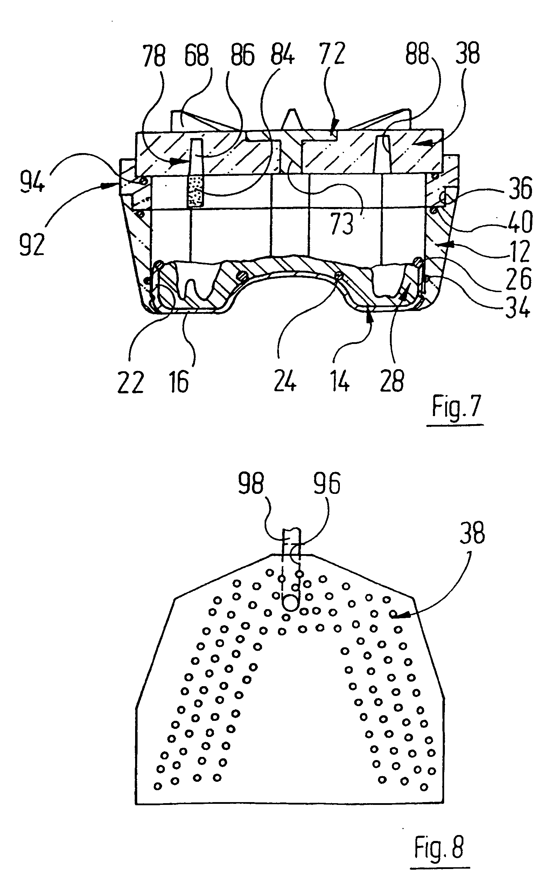

Bei der in Figur 7 gezeigten abgewandelten Form 10 hat man dadurch einen höheren Formhohlraum 42, daß zwischen das obere Ende der Umfangswand 12 und die Modellplatte 38 ein Distanzelement 92 eingefügt ist, dessen innere und äußere Randkontur der inneren und äußeren Randkontur des oberen Endes der Umfangswand 12 entspricht. Die untere Stirnfläche des Distanzelementes 92 ist komplementär zur oberen Stirnfläche der Umfangswand 12, und die obere Stirnfläche des Distanzelementes 92 hat gleiche Geometrie wie die obere Stirnfläche der Umfangswand 12.

Eine weitere Dichtung 94 sorgt für eine Abdichtung zwischen dem Distanzelement 92 und der Modellplatte 38. Es versteht sich, daß der Zahnarzt oder der Zahntechniker eine Mehrzahl von Distanzelementen 92 vorhält, um die Höhe des Formhohlraumes 42 möglichst nahe bei der benötigten Höhe des Zahnmodelles wählen zu können. Zur Einstellung stärker vergrößerter Formhohlraume 42 kann man auch mehrere derartige Distanzelemente übereinander stapeln.

Figur 8 zeigt eine abgewandelte Modellplatte 38, welche mit einem Kanal 96 versehen ist. Dieser Kanal ist über einen Stopfen 98, der gleiche Eigenschaften aufweist wie der Stopfen 64, mit der Saugseite der Saugpumpe 66 verbunden.

In weiterer Abwandlung kann die Modellplatte 38 auch mit einer Mehrzahl derartiger Kanäle 96 versehen sein, die jeweils über einen zugeordneten Stopfen 98 mit der Saugpumpe 66 versehen sind.

Enthält eine Modellplatte 38 derartige Kanäle 96, kann man den Anschlußstutzen 58 auch weglassen.

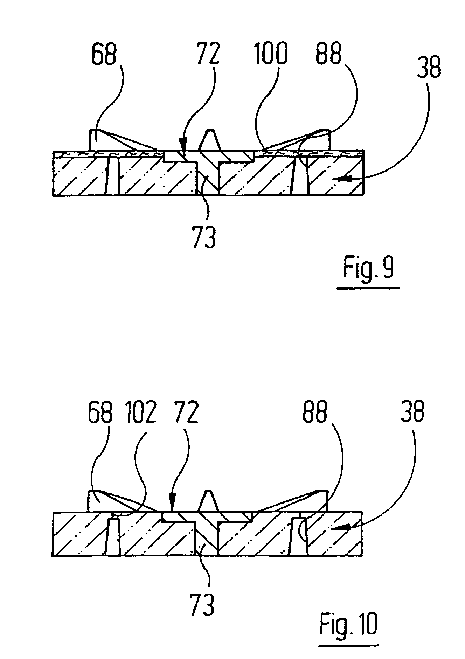

Bei der weiter abgewandelten Modellplatte nach Figur 9 sind die Böden der Sackausnehmungen 88 durch eine Materiallage 100 gebildet, welche für Gas durchlässig, für Modellmaterial dagegen undurchlässig ist.

Verwendet man eine Materiallage 100 die nur in einer Richtung gasdurchlässig ist, in der anderen Richtung aber sperrt (z.B. eine semipermeable Membran) so kann man den Formhohlraum einer solchen abgewandelten Form auch evakuieren.

Statt dessen kann man gemäß Figur 10 von den Böden der Sackausnehmungen 88 zur außen liegenden Seite der Modellplatte 38 verlaufende, sehr dünne Entlüfungsbohrungen 102 vorsehen.

Betreibt man eine derartige Modellplatte aufgreifende Form 10 nicht mit Unterdruck sondern führt man dieser Form das Modellmaterial unter Überdruck zu, so kann Luft aus den Sackausnehmungen 88 entweichen und Modellmaterial kann in die Sackausnehmungen 88 eindringen. Man erhält in diesem Falle dann am Zahnmodell 80 eine Vielzahl von angeformten Positionierzapfen. Man benötigt somit keine Positionierstifte.

Arbeitet man mit derartiger Überdruckbeaufschlagung der Form 10, so kann man auch später noch herausnehmbare Zahnmodellsegmente einfach dadurch definieren, daß man das Zahnmodell an den gewünschten Stellen druchsägt. Bei einem Ausführungsbeispiel nach den Figuren 1 bis 6 muß dagegen durch entsprechendes Bestücken der Modellplatte 38 mit Positionierstiften 78 schon vor dem Einfüllen des Modellmateriales festgelegt werden, an welchen Stellen herausnehmbare Modellsegmente vorliegen.

Die Überdruckbeaufschlagung des Formhohlraumes 42 beim Einfüllen des Modellmateriales erhält man gemäß Figur 11 dadurch, daß man den Einlaß der Drossel 62 mit dem Auslaß eines Kompressors 104 verbindet. Der Stopfen 64 steht dann in direkter Strömungsverbindung mit der Umgebungsatmosphäre.

Alternativ kann man zur Überdruck-Einspeisung des Modellmateriales eine Spritze oder eine mechanische Förderpumpe verwenden.

Um ein Abheben der Modellplatte 38 von der Umfangswand 12 bei Überdruckbeauschlagung des Formhohlraumes 42 zu vermeiden, kann man zwischen Modellplatte 38 und Umfangswand 12 eine Formschlußverbindung vorsehen, z.B. eine der Nut 30 entsprechende Nut in der Außenfläche der Montageplatte 38 und eine von der Seitenwand der Randausnehmung 36 getragene Rippe, die der Ripppe 32 entspricht.

In der Praxis wird mit einer kleinen Anzahl unterschiedliche Abmessung aufweisender Abdrucklöffel 14 gearbeitet, um unterschiedliche Größe aufweisende Kiefer von Patienten abzudecken. Es versteht sich, daß der Zahnarzt oder der Dentaltechniker eine entsprechende Anzahl entsprechend unterschiedliche Größe aufweisender Umfangswände 12 und Modellplatten 38 vorhält, um mit den verschiedenen Abdrucklöffelgrößen in der oben beschriebenen Art und Weise Zahnmodelle herstellen zu können.

Es versteht sich, daß man die den Formhohlraum 42 begrenzenden Flächen vor dem Zuführen des Modellmateriales mit einem geeigneten Trennmittel überzieht (z. B. Trennmittelspray), so daß sich das Zahnmodell nach dem Aushärten leicht von diesen Flächen löst.

## Patentansprüche

1. Form zur Herstellung eines Zahnmodelles ausgehend von von einem Zahnabdruck, mit einer den Zahnabdruck (28) aufnehmenden Unterform, welche eine Umfangswand (12) und eine Bodenwand aufweist, wobei die Umfangswand (12) dicht mit einem die Bodenwand bildenden und den Zahnabdruck (28) tragenden Abdrucklöffel (14) verbunden ist und auf das obere Ende der Umfangswand (12) eine Modellplatte (38) dicht aufsetzbar ist, **dadurch gekennzeichnet, daß** die Umfangswand (12) und die Modellplatte (38) zusammen mindestens zwei Fluidöffnungen (56, 58, 96) wobei mindestens eine der Fluidöffnungen mit einer Quelle (60) für Modellmaterial im Verbindung steht aufweisen, die mit dem durch die Umfangswand (12) den Abdrucklöffel (14) und die Modellplatte (38) begrenzten Formhohlraum (42) in Verbindung stehen.

2. Form nach Anspruch 1, **dadurch gekennzeichnet, daß** die Fluidöffnungen (56, 58, 96) der formseitigen Begrenzungsfläche der Modellplatte (38) benachbart sind.

3. Form nach Anspruch 1 oder 2, **dadurch gekennzeichnet, daß** die Fluidöffnungen (56, 58, 96) mit einander strömungsmäßig gegenüberliegenden Abschnitten des Formhohlraumes (42) in Verbindung stehen.

4. Form nach einem der Ansprüche 1 bis 3, **dadurch gekennzeichnet, daß** mindestens eine der Fluidöffnungen (56, 58, 96) einen Stopfen (64, 98) aufweist, welcher für Gas, nicht jedoch für Modellmaterial durchlässig ist.

5. Form nach einem der Ansprüche 1 bis 4, **dadurch gekennzeichnet, daß** die Dichtverbindung zwischen der Umfangswand (12) und dem Abdrucklöffel (14) zusammenarbeitende Formschlußmittel (30, 32) aufweist, die auf der Innenseite der Umfangswand (12) bzw. auf der Außenseite des Abdrucklöffels (14) vorgesehen sind.

6. Form nach einem der Ansprüche 1 bis 5, **dadurch gekennzeichnet, daß** die Dichtverbindung zwischen der Umfangswand (12) und dem Abdrucklöffel (14) zueinander komplementäre Oberflächenabschnitte der Innenfläche der Umfangswand (12) bzw. der Außenfläche des Abdrucklöffels (14) umfaßt.

7. Form nach einem der Ansprüche 1 bis 6, **dadurch gekennzeichnet, daß** die Dichtverbindung zwischen der Umfangswand (12) und dem Abdrucklöffel (14) mindestens ein Dichtelement (34) umfaßt.

8. Form nach einem der Ansprüche 1 bis 7, **dadurch gekennzeichnet, daß** die Modellplatte (38) formschlüssig in eine Ausnehmung (36) eingreift, die in der oberen Stirnfläche der Umfangswand (12) vorgesehen ist.

9. Form nach einem der Ansprüche 1 bis 8, **dadurch gekennzeichnet, daß** die Modellplatte (38) mit einer Vielzahl in einem Raster angeordneter hinterschneidungsfreier Sackausnehmungen (88) versehen ist, wobei sich letztere vorzugsweise zum Sackausnehmungsboden hin verjüngen.

10. Form nach Anspruch 9, **gekennzeichnet durch** Positionierstifte (78), welche einen zu den Sackausnehmungen (88) komplementären Positionierabschnitt (86) und einen fest in das Modellmaterial einbettbaren Verankerungsabschnitt (84) aufweisen.

11. Form nach Anspruch 9, **dadurch gekennzeichnet, daß** ein oberer Abschnitt der Sackausnehmungen, vorzugsweise der Boden der Sackausnehmungen für Gase, nicht jedoch für Modellmaterial durchlässig ist.

12. Form nach einem der Ansprüche 1 bis 11, **gekennzeichnet durch** eine Einrichtung (66; 104) zum Erzeugen eines Druckunterschiedes zwischen mindestens zweien der Fluidöffnungen (56, 58, 96).

13. Form nach einem der Ansprüche 1 bis 12, **gekennzeichnet durch** ein Verlängerungsteil (92) für die Umfangswand (12), dessen untere Stirnfläche zur oberen Stirnfläche der Umfangswand komplementär ist und dessen obere Stirnfläche der Umfangswand (12) entspricht.

14. Form nach einem der Ansprüche 1 bis 13, **dadurch gekennzeichnet, daß** die Umfangswand (12) einen sie in Umfangsrichtung unterbrechenden Schlitz (44) aufweist, und daß dem Schlitz (44) eine Spanneinrichtung (46 bis 50) zugeordnet ist.

15. Form nach Anspruch 14, **dadurch gekennzeichnet, daß** dem dem Schlitz (44) eine Dichteinrichtung (53) zugeordnet ist.

16. Form nach einem der Ansprüche 1 bis 15, **dadurch gekennzeichnet, daß** die Umfangswand (12) aus transparentem oder transluzentem Material hergestellt ist.

17. Form nach einem der Ansprüche 1 bis 16, **dadurch gekennzeichnet, daß** die Modellplatte (38) aus transparentem oder transluzentem Material hergestellt ist.

18. Form nach einem der Ansprüche 1 bis 17, **dadurch gekennzeichnet, daß** die Innenfläche des oberen Abschnittes der Umfangswand (12) die Form eines Polygons hat.

## Claims

1. Mould for producing a tooth model from a dental impression, having a bottom mould, which receives the dental impression (28) and comprises a peripheral wall (12) and a bottom wall in which the peripheral wall (12) is sealingly connected to an impression tray (14), which forms the bottom wall and carries the dental impression (28) and a model plate (38) is mountable sealingly onto the top end of the peripheral wall (12), **characterized in that** the peripheral wall (12) and the model plate (38) together have at least two liquid openings (56, 58, 96) which communicate with the mould cavity (42) delimited by the peripheral wall (12), the impression tray (14) and the model plate (38), at least one of the fluid openings communicating with a source (60) of modelling material.

2. Mould according to claim 1, **characterized in that**
the liquid openings (56, 58, 96) are adjacent to the mould-side boundary surface of the model plate (38).

3. Mould according to claim 1 or 2, **characterized in**
**that** the liquid openings (56, 58, 96) are connected to portions of the mould cavity (42) which, in terms of flow, lie opposite one another.

4. Mould according to one of claims 1 to 3, **characterized**
**in that** at least one of the liquid openings (56, 58, 96) has a stopper (64, 98), which is permeable to gas but not to modelling material.

5. Mould according to one of claims 1 to 4, **characterized**
**in that** the sealing connection between the peripheral wall (12) and the impression tray (14) comprises cooperating positive locking means (30, 32), which are provided at the inside of the peripheral wall (129) and the outside of the impression tray (14) respectively.

6. Mould according to one of claims 1 to 5, **characterized**
**in that** the sealing connection between the peripheral wall (12) and the impression tray (14) comprises mutually complementary surface portions of the inner surface of the peripheral wall (12) and of the outer surface of the impression tray (14).

7. Mould according to one of claims 1 to 6, **characterized**
**in that** the sealing connection between the peripheral wall (12) and the impression tray (14) comprises at least one sealing element (34).

8. Mould according to one of claims 1 to 7, **characterized**
**in that** the model plate (38) engages positively into a recess (36), which is provided in the top end face of the peripheral wall (12).

9. Mould according to one of claims 1 to 8, **characterized**
**in that** the model plate (38) is provided with a plurality of undercut-free blind recesses (88) arranged in a grid, wherein the latter preferably taper towards the blind recess base.

10. Mould according to claim 9, **characterized by** positioning
pins (78), which comprise a positioning portion (86) complementary to the blind recesses (88) and an anchoring portion (84) firmly embeddable in the modelling material.

11. Mould according to claim 9, **characterized in that**
a top portion of the blind recesses, preferably the base of the blind recesses, is permeable to gases but not to modelling material.

12. Mould according to one of claims 1 to 11, **characterized**
**by** a device (66; 104) for generating a pressure difference between at least two of the liquid openings (56, 58, 96).

13. Mould according to one of claims 1 to 12, **characterized**
**by** a lengthening part (92) for the peripheral wall (12) having a bottom end face complementary to the top end face of the peripheral wall and a top end face corresponding to the peripheral wall (12).

14. Mould according to one of claims 1 to 13, **characterized**
**in that** the peripheral wall (12) has a slot (44) interrupting it in peripheral direction, and that a clamping device (46 to 50) is associated with the slot (44).

15. Mould according to claim 14, **characterized in that**
a sealing device (53) is associated with the slot (44).

16. Mould according to one of claims 1 to 15, **characterized**
**in that** the peripheral wall (12) is made of transparent or translucent material.

17. Mould according to one of claims 1 to 16, **characterized**
**in that** the model plate (38) is made of transparent or translucent material.

18. Mould according to one of claims 1 to 17, **characterized**
**in that** the inner surface of the top portion of the peripheral wall (12) has the shape of a polygon.

## Revendications

1. Moule pour réaliser un moulage dentaire à partir d'une empreinte dentaire, comprenant un moule inférieur recevant l'empreinte dentaire (28), qui présente une paroi périphérique (12) et une paroi de fond, sachant que la paroi périphérique (12) est reliée de façon étanche à un porte-empreinte (14) formant la paroi de fond et portant l'empreinte dentaire (28) et qu'une plaque de moulage (38) peut être posée de façon étanche sur l'extrémité supérieure de la paroi périphérique (12), **caractérisé en ce que** la paroi périphérique (12) et la plaque de moulage (38) présentent à elles deux au moins deux ouvertures pour fluide (56, 58, 96), sachant qu'au moins l'une des ouvertures pour fluide est raccordée à une source (60) de matière pour moulage, qui communiquent avec la cavité (42) du moule qui est délimitée par la paroi périphérique (12), le porte-empreinte (14) et la plaque de moulage (38).

2. Moule selon la revendication 1, **caractérisé en ce que** les ouvertures pour fluide (56, 58, 96) sont voisines de la surface de délimitation de la plaque de moulage (38) située côté moule.

3. Moule selon la revendication 1 ou 2, **caractérisé en ce que** les ouvertures pour fluide (56, 58, 96) communiquent avec des segments de la cavité (42) du moule qui sont opposés du point de vue de la circulation.

4. Moule selon l'une des revendications 1 à 3, **caractérisé en ce qu'**au moins l'une des ouvertures pour fluide (56, 58, 96) présente un bouchon (64, 98) perméable au gaz, mais imperméable au produit de moulage.

5. Moule selon l'une des revendications 1 à 4, **caractérisé en ce que** la liaison étanche entre la paroi périphérique (12) et le porte-empreinte (14) présente des moyens coopérant par engagement positif (30, 32) qui sont prévus respectivement sur la face intérieure de la paroi périphérique (12) et sur la face extérieure du porte-empreinte (14).

6. Moule selon l'une des revendications 1 à 5, **caractérisé en ce que** la liaison étanche entre la paroi périphérique (12) et le porte-empreinte (14) est constituée par des segments de surface complémentaires respectivement de la surface intérieure de la paroi périphérique (12) et de la surface extérieure du porte-empreinte (14).

7. Moule selon l'une des revendications 1 à 6, **caractérisé en ce que** la liaison étanche entre la paroi périphérique (12) et le porte-empreinte (14) comprend au moins un élément d'étanchéité (34).

8. Moule selon l'une des revendications 1 à 7, **caractérisé en ce que** la plaque de moulage (38) se met en prise par engagement positif dans un évidement (36) qui est prévu dans la face frontale supérieure de la paroi périphérique (12).

9. Moule selon l'une des revendications 1 à 8, **caractérisé en ce que** la plaque de moulage (38) est dotée de nombreux évidements borgnes (88) exempts de contre-dépouille et formant un quadrillage, lesdits évidements se rétrécissant de préférence en direction du fond des évidements borgnes.

10. Moule selon la revendication 9, **caractérisé par** des chevilles de positionnement (78) qui présentent un segment de positionnement (86) complémentaire aux évidements borgnes et un segment d'ancrage (84) pouvant être scellé dans le produit de moulage.

11. Moule selon la revendication 9, **caractérisé en ce qu'**un segment supérieur des évidements borgnes, de préférence le fond des évidements borgnes, est perméable aux gaz, mais imperméable au produit de moulage.

12. Moule selon l'une des revendications 1 à 11, **caractérisé par** un dispositif (66 ; 104) pour produire une différence de pression entre au moins deux des ouvertures pour fluide (56, 58, 96).

13. Moule selon l'une des revendications 1 à 12, **caractérisé par** une pièce de prolongation (92) pour la paroi périphérique (12), dont la surface frontale inférieure est complémentaire à la surface frontale supérieure de la paroi périphérique et dont la surface supérieure correspond à la paroi périphérique (12).

14. Moule selon l'une des revendications 1 à 13, **caractérisé en ce que** la paroi périphérique (12) présente une fente (44) qui l'interrompt dans la direction du pourtour, et **en ce qu'**un dispositif de serrage (46 à 50) est associé à la fente (44).

15. Moule selon la revendication 14, **caractérisé en ce qu'**un dispositif d'étanchéité (53) est associé à la fente (44).

16. Moule selon l'une des revendications 1 à 15, **caractérisé en ce que** la paroi périphérique (12) est fabriquée en une matière transparente ou translucide.

17. Moule selon l'une des revendications 1 à 16, **caractérisé en ce que** la plaque de moulage (38) est fabriquée en une matière transparente ou translucide.

18. Moule selon l'une des revendications 1 à 16, **caractérisé en ce que** la surface intérieure du segment supérieur de la paroi périphérique (12) possède la forme d'un polygone.
